(19)

**Europäisches Patentamt**
**European Patent Office**
**Office européen des brevets**

(11) **EP 4 661 264 A1**

(12) # EUROPEAN PATENT APPLICATION

(43) Date of publication:
**10.12.2025 Bulletin 2025/50**

(21) Application number: **24212065.7**

(22) Date of filing: **11.11.2024**

(51) International Patent Classification (IPC):
*H02M 1/00* (2006.01)    *H02M 1/42* (2007.01)
*H02M 3/335* (2006.01)    *H01F 5/04* (2006.01)
*H01F 5/06* (2006.01)    *H01F 27/28* (2006.01)
*H01F 41/10* (2006.01)    *H01F 41/076* (2016.01)
*H01B 13/08* (2006.01)    *H01R 4/02* (2006.01)
*H01R 11/16* (2006.01)

(52) Cooperative Patent Classification (CPC):
**H01F 41/076; H01F 5/04; H01F 5/06;**
**H01F 27/2823; H01F 27/2828; H01F 41/10;**
**H02M 1/0064; H02M 1/007; H02M 1/4225;**
**H02M 3/01; H02M 3/33507; H02M 3/33571;**
**H02M 7/06;** H02M 1/348

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **07.06.2024  CN 202421300621 U**
**02.09.2024  CN 202411220419**
**02.09.2024  CN 202422140760 U**

(71) Applicant: **Delta Electronics (Jiangsu) Ltd.**
**Wujiang City, Jiangsu (CN)**

(72) Inventors:
• **YUAN, Xiaoxia**
**Wujiang City, Jiangsu Province (CN)**

• **LUO, Jia-Dian**
**Wujiang City, Jiangsu Province (CN)**
• **YEN, Chun-Ching**
**Wujiang City, Jiangsu Province (CN)**
• **TUNG, Huai-Pei**
**Wujiang City, Jiangsu Province (CN)**
• **LAI, Chih-Ho**
**Wujiang City, Jiangsu Province (CN)**
• **ZHANG, Shaodong**
**Wujiang City, Jiangsu Province (CN)**
• **PENG, Ming-Hsien**
**Wujiang City, Jiangsu Province (CN)**

(74) Representative: **Uexküll & Stolberg**
**Partnerschaft von**
**Patent- und Rechtsanwälten mbB**
**Beselerstraße 4**
**22607 Hamburg (DE)**

(54) **ISOLATION CIRCUIT AND WITHSTAND VOLTAGE TESTING METHOD THEREFOR**

(57)    An isolation circuit (300, 300a) includes a power factor correction circuit (310) and a resonant conversion circuit (320). The resonant conversion circuit (320) includes a primary circuit (321, 310a), a resonant circuit (322) and a secondary circuit (323, 320a). The resonant circuit (322) includes a resonant inductor (Lr), a resonant capacitor (Cr) and a transformer (T) including a primary winding (Np) and a secondary winding (Ns). At least one of the primary winding (Np) and the secondary winding (Ns) includes a winding wire having a wire (41, A) and an insulating layer (E) wrapping therearound, wherein the insulating layer (E) is disposed through one edge (E1) thereof, which is in an X-axis direction, on the wire (41, A), which is arranged in the X-axis direction, and then wraps around the wire (41, A) in a Y-axis direction perpendicular to the X-axis direction until a number of insulating layers wrapping the wire (41, A) is at least three. A withstand voltage value between an input terminal and an output terminal of the isolation circuit (300, 300a) is ranged between 4000VAC and 5000VAC.

FIG. 25

EP 4 661 264 A1

**Description**

TECHNICAL FIELD

The present application relates to the field of power electronics, and more particularly to an isolation circuit and a withstand voltage testing method therefor.

BACKGROUND

Generally, the transformer can increase the inductance of the switching mode power supply by adding an external inductor to adjust the electrical characteristics thereof, for example, to improve the load adaptability and stability of the transformer, so that the transformer can operate more efficiently under different working conditions. Also, the increase in the inductance can reduce the short circuit current of the transformer, which reduces the current loss in windings of the transformer, thereby helping to improve the efficiency of the transformer and reduce energy loss.

It is known that arranging a space between the primary winding and the secondary winding in the transformer to increase the distance therebetween can replace the external inductor. However, the arranged space usually causes an increase in the height of the transformer and also the volume thereof, which limits the usage of the transformer.

Moreover, the winding wire used in the switching mode power supply transformer is required to withstand an extremely high voltage. In order to meet the safety requirements and the insulation requirement, a three-layer insulated Kara line is used as the winding wire for most of the existing switching mode power supply transformers, which increases the material cost of the winding wire. On the other hand, the three-layer insulated Kara line is so hard that, when they are processed into windings, the resultant transformer will occupy too large space, which decreases the power density of the transformer. Also, since the volume occupied by windings of the three-layer insulated Kara line is larger, the distance between the primary winding and the secondary winding becomes closer, resulting in a lower withstand voltage between the input terminal and the output terminal of the circuit. Besides, it is also known that another kind of winding wire which is covered by the insulating layer in a spiral manner suffers similar problems.

Accordingly, the present application provides an isolation circuit and a withstand voltage testing method therefor for solving the drawbacks above.

SUMMARY

In accordance with an aspect of the present application, an isolation circuit and a withstand voltage testing method therefor are provided. The isolation circuit includes a power factor correction circuit and a resonant conversion circuit sequentially connected in series. The resonant conversion circuit includes a primary circuit, a resonant circuit and a secondary circuit sequentially connected in series. The primary circuit is electrically connected to the power factor correction circuit. The resonant circuit includes a resonant inductor, a resonant capacitor and a transformer, wherein the transformer includes a primary winding and a secondary winding, and the resonant inductor, the resonant capacitor and the primary winding are connected in series. The secondary circuit is electrically connected to the secondary winding. At least one of the primary winding and the secondary winding includes a winding wire having a wire and an insulating layer wrapping around the wire, wherein the insulating layer is disposed through one edge thereof, which is in a direction parallel to an X-axis, on the wire, which is arranged in a direction parallel to the X-axis, and then wraps around the wire in a Y-axis direction perpendicular to the X-axis direction until a number of insulating layers wrapping the wire is at least three. A withstand voltage value between an input terminal and an output terminal of the isolation circuit is ranged between 4000VAC and 5000VAC.

In accordance with another aspect of the present application, a withstand voltage testing method for an isolation circuit is provided. The method includes providing an isolation circuit, wherein the isolation circuit includes a power factor correction circuit and a resonant conversion circuit sequentially connected in series, wherein the resonant conversion circuit includes a primary circuit, a resonant circuit and a secondary circuit sequentially connected in series; the primary circuit is electrically connected to the power factor correction circuit, the resonant circuit includes a resonant inductor, a resonant capacitor and a transformer, wherein the transformer includes a primary winding and a secondary winding, and the resonant inductor, the resonant capacitor and the primary winding are connected in series; and the secondary circuit is electrically connected to the secondary winding; wherein at least one of the primary winding and the secondary winding includes a winding wire including a wire and an insulating layer wrapping around the wire, and the insulating layer is disposed through one edge thereof, which is in a direction parallel to an X-axis, on the wire, which is arranged in a direction parallel to the X-axis, and then wraps around the wire in a Y-axis direction perpendicular to the X-axis direction until a number of insulating layers of the winding wire is at least three; and short-circuiting an input terminal and an output terminal of the isolation circuit for performing a high voltage test and obtaining a withstand voltage value between the input terminal and the output terminal of the isolation circuit, wherein the withstand voltage value is ranged between 4000VAC and 5000VAC.

The isolation circuit of the present application adopts the winding wire, which is easy to realize automatic processing, is wrapped by at least three insulating layers and has a final diameter less than the conventional three-layer insulated Kara line, and thus, is advantageous of high withstand voltage value and meeting the safety requirements. Moreover, the adopted winding wire which has a smaller diameter than the existing ones not only reduces the volume of winding, increases the distance between windings, but also reduces the overall height of the transformer and increases the leakage inductance.

BRIEF DESCRIPTION OF THE DRAWINGS

The above contents of the present application will become more readily apparent to those ordinarily skilled in the art after reviewing the following detailed description and accompanying drawings, in which:

FIG. 1 is a top view of the structure of the winding wire provided by an embodiment of the present application;
FIG. 2 is a side view of the structure of the winding wire provided by an embodiment of the present application;
FIG. 3 is a top view of the structure of the winding wire provided by another embodiment of the present application;
FIG. 4 is a side view of the structure of the winding wire provided by another embodiment of the present application;
FIG. 5 is a flow chart of a method for producing the winding wire in FIG. 1;
FIG. 6 is a step-by-step flow chart of step S12 in FIG. 5;
FIG. 7 is a flow chart of a method for producing the winding wire in FIG. 3;
FIG. 8 is a top view of the structure of the winding wire provided by yet another embodiment of the present application;
FIG. 9 is a sectional view of the winding wire shown in FIG. 1;
FIG. 10 is a sectional view of the winding wire shown in FIG. 8;
FIG. 11 is a sectional view of a single wire of the winding wire;
FIG. 12 is a side view of a plurality of wires twisted spirally;
FIG. 13 is a side view of a winding wire having an insulating layer wrapping around the plurality of wires twisted spirally shown in FIG. 12;
FIG. 14 is a sectional view of the winding wire shown in FIG. 13;
FIG. 15A-15B are schematic views of a wrapping tool and a wrapping assistance tool as being used in producing the winding wire in another embodiment of the present application;
FIG. 15C is a schematic view of a wire wrapped by the insulating layer;
FIG. 15D is a schematic view of a wire wrapped by the insulating layer and cut at two ends;
FIG. 16 is a schematic view of a twisting tool as being used in performing a twisting process;
FIG. 17 is a schematic view of a twisted exposed end of a wire;
FIG. 18 is a schematic view showing the arrangement as performing a soldering process;
FIG. 19A is a schematic view of a winding wire after the soldering process;
FIG. 19B is a schematic view of the soldered winding wire which is bent at one end thereof;
FIG. 20 is a schematic view of a thin-type transformer in an embodiment of the present application;
FIG. 21 is an exploded schematic view of the thin-type transformer in the embodiment of the present application;
FIG. 22 is a schematic view of a bobbin in an embodiment of the present application;
FIG. 23A is a T1-T1' sectional view of the thin-type transformer in the embodiment of the present application;
FIG. 23B is a T2-T2' sectional view of the thin-type transformer in the embodiment of the present application;
FIG. 24A is a T1-T1' sectional view of a thin-type transformer in another embodiment of the present application;
FIG. 24B is a T2-T2' sectional view of a thin-type transformer in another embodiment of the present application;
FIG. 25 is a circuit diagram of an isolation circuit in an embodiment of the present application;
FIG. 26 is a circuit diagram of an isolation circuit in another embodiment of the present application; and
FIG. 27 is a flowchart of a voltage withstand testing method for the isolation circuit of the present application.

DETAILED DESCRIPTION OF EMBODIMENTS

The present application will now be described more specifically with reference to the following embodiments. It is to be noted that the following descriptions of embodiments of this application are presented herein for purpose of illustration and description only. It is not intended to be exhaustive or to be limited to the precise form disclosed.

Reference will be made in detail to the accompanying drawings and embodiments of the present application. The embodiments were carried out on the premise of the technical solutions of the present application, and methods and operation processes are disclosed, but the protection scope of the present application is not limited to the following embodiments.

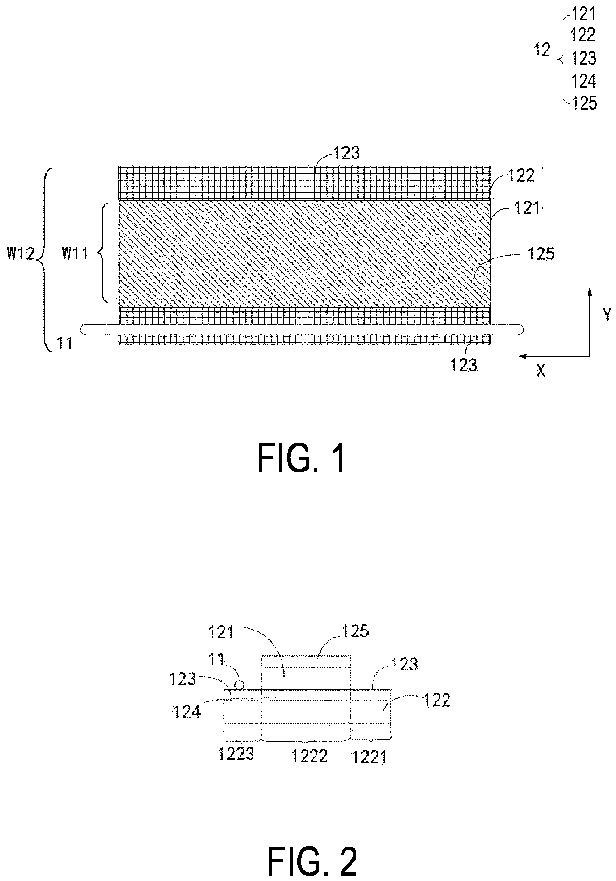

As shown in FIGS. 1-2, the winding wire of the present application includes a wire 11 and an insulation structure 12, the wire 11 can be a substantially insulated solid wire or a substantially insulated strand wire, etc., the insulation structure 12 wraps around the wire 11. The insulation structure 12 includes a first insulating layer 121 and a second insulating layer 122. The first insulating layer 121 has a first width W11, and the second insulating layer 122 has a second width W12, wherein the first width W11 is less than the second width W12. The second insulating layer 122 has an X-axis direction and a Y-axis direction perpendicular to the X-axis direction, and the first insulating layer 121 is disposed on the second insulating layer 122 in a direction parallel to the X-axis, and the wire 11 is disposed, in a direction parallel to the X-axis, on the portion of the second insulating layer 122 that is not covered by the first insulating layer 121. The first insulating layer 121 and the second insulating layer 122 wrap around the wire 11 in the Y-axis direction. For example, the number of insulating layers of the winding wire is at least three to meet the safety requirements, the number of insulating layers of the winding wire is at least three layers to meet the safety requirements. The number of insulating layers of the winding wire can be controlled by the first width W11 and/or the second width W12 and the location of the first insulating layer 121 on the second insulating layer 122. This processing method is simple, and the cost is also lower than the three-layer insulated Kara line.

Further, after the first insulating layer 121 bonded to the second insulating layer 122, the second insulating layer 122 is sequentially divided into a first fixed part 1221, an overlapping part 1222 and a second fixed part 1223 in the Y-axis direction, and the wire 11 is disposed on the second fixed part 1223 in the X-axis direction. The width of the first fixed part 1221 and/or the second fixed part 1223 may be greater than or equal to the perimeter of the wire 11, and the width of the overlapping part 1222 also may be greater than or equal to the perimeter of the wire 11. Specifically, the widths of the first fixed part 1221, the second fixed part 1223, and the overlapping part 1222 can be equal to the perimeter of the wire 11, and then the number of the insulating layers of the winding wire is exactly three, which is beneficial to further saving materials and reducing costs, and is easy to realize automatic processing.

Furthermore, the insulation structure 12 further includes a first adhesive layer 123 and a second adhesive layer 124. The first adhesive layer 123 is disposed on the first fixed portion 1221 and/or the second fixed part 1223, the wire 11 is disposed on the first adhesive layer 123, and the first adhesive layer 123 is used to fix the wire 11 more securely on the second insulating layer. The second adhesive layer 124 is disposed between the overlapping part 1222 and the first insulating layer 121 for bonding the first insulating layer 121 and the second insulating layer 122. Wrapping around the wire 11 begins from the second fixed part 1223 provided with the wire 11 until bonded to the first fixed portion 1221. As shown in FIG. 2, the thicknesses of the first adhesive layer 123 and the second adhesive layer 124 can be controlled to the same.

In other embodiments, the wire 11 may also be disposed on the first fixed part 1221 in a direction parallel to the X-axis, and wrapping around the wire 11 begins from the first fixed part 1221 provided with the wire 11 until bonded to the second fixed part 1223.

In some embodiments, the winding wire of the present application can be carried out in such a manner that the wire 11 and the first insulating layer 1221 are contact directly with each other, so that it makes the insulation structure 12 winding the wire 11 more easily and smoothly to ensure that the processed wire surface is flat and compact.

Further, the insulation structure 12 includes a third adhesive layer 125 disposed on the first insulating layer 121. Compared with the foregoing manner in which the wire 11 and the first insulating layer 121 are contact directly with each other, this manner allows the wire 11 to be better fixed during winding process.

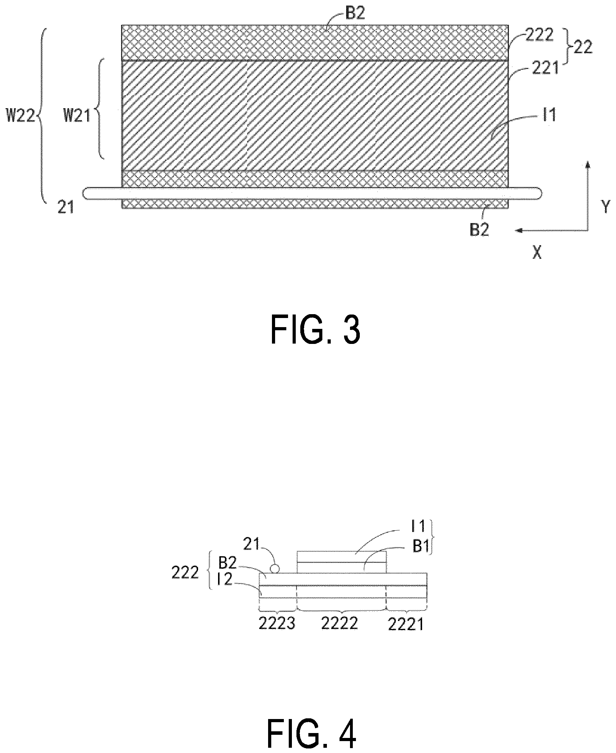

Referring to FIGS. 3-4, FIG. 3 is a top view of the structure of a second embodiment of the winding wire of the present application, and FIG. 4 is a side view of FIG. 3. The winding wire of the present application includes a wire 21 and an insulation structure 22, the insulation structure 22 wraps around the wire 21, the wire 21 can be a substantially insulated solid wire or a substantially insulated strand wire, etc. The insulation structure 22 includes a first insulating tape 221 and a second insulating tape 222. The first insulating tape 221 has a first width W21; the second insulating tape 222 has a second width W22, and the second insulating tape 222 has an X-axis direction and a Y-axis direction perpendicular to the X-axis direction. The first insulating tape 221 is bonded to the second insulating tape 222 in a direction parallel to the X-axis, and the first width W21 is less than the second width W22. The wire 21 is disposed, in a direction parallel to the X-axis, on the portion of the second insulating tape 222 that is not covered by the first insulating tape 221, and the first insulating tape 221 and the second insulating tape 222 wrap around the wire 21 in the Y-axis direction. The number of insulating layers of the winding wire is at least three to meet the safety requirements.

The first insulating tape 221 includes a first backing layer B1 and a first insulating substrate layer I1 which are disposed opposite to each other, and the second insulating tape 222 includes a second backing layer B2 and a second insulating substrate layer I2 which are disposed opposite to each other. The first backing layer B1 is bonded to the second backing layer B2. The second insulating substrate layer I2 of the second insulating tape 222 is divided into a first fixed part 2221, an overlapping part 2222 and a second fixed part 2223 sequentially in the Y-axis direction. In other words, the first insulating substrate layer I1 and the second insulating substrate layer I2 are the first insulating layer 121 and the second insulating layer 122, respectively.

The wire 21 is disposed on the second fixed part 2223 in a direction parallel to the X-axis, and since there is the second backing layer B2 between the second fixed part 2223 and the wire 21, the wire 21 can be fixed to the second insulating layer I2 more securely before winding. When wrapping around the wire 21, the part of the first insulating tape 221 that is in contact with the winding wire is the insulating substrate layer I1. Since the contact surface is a smooth, flat surface, the wire 21 can be wound more easily and smoothly to ensure that the processed wire surface is flat and compact. Moreover, since the first fixed part 2221 also has the backing layer B2 thereon, it can be adhered to the second insulating substrate layer I2 more conveniently to finally complete the winding. In addition, the texture of the insulating tapes is relatively soft, so, when the winding wire is used for producing the windings of a transformer or another magnetic element, gaps between the winding wires can be reduced compared with the three-layer insulated Kara line, thereby further reducing the volume of the magnetic element and further enhancing the power density. Besides, the wire 21 can also be disposed on the first fixed part 2221 in a direction parallel to the X-axis, and wrapping around the wire 21 begins from the first fixed part 2221 provided with the wire 21 until bonded to the second fixed part 2223.

In another embodiment of the present application, the first insulating substrate layer II is bonded to the second backing layer B2, and the insulating substrate layer I2 of the second insulating tape 222 is divided into a first fixed part 2221, an overlapping part 2222, and a second fixed part 2223 sequentially.

The width of the first fixed part 2221 and/or the second fixed part 2223 may be greater than or equal to the perimeter of the wire 21, and the width of the overlapping part 2222 may also be greater than or equal to the perimeter of the wire 121. Specifically, the widths of the first fixed part 2221, the second fixed part 2223, and the overlapping part 2222 can be equal to the perimeter of the wire 21, and then the number of the insulating layers of the winding wire is exactly three, which is advantageous for the further saving of materials and costs, and which facilitates automatic processing.

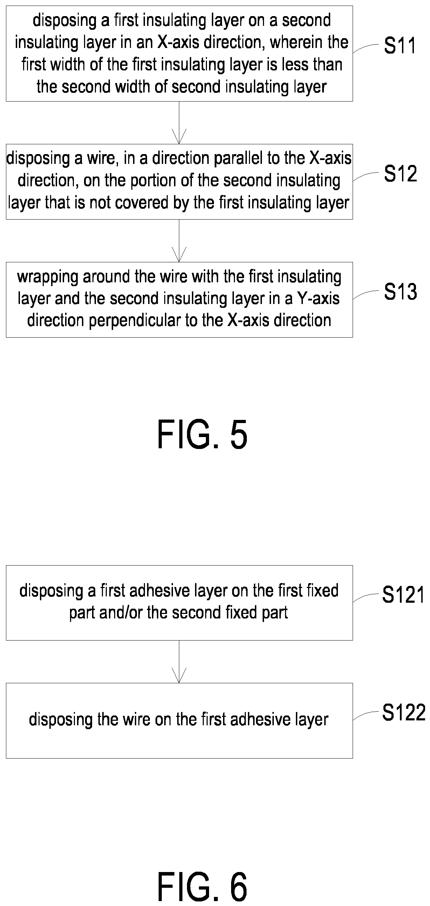

Referring to FIGS. 5-6, FIG. 5 is a flow chart of a method for producing the winding wire in FIG. 1, and FIG. 6 is a step-by-step flow chart of step S12 in FIG. 5. As shown in FIGS. 5-6, the method for producing a winding wire according to the present application includes:

Step S11: disposing a first insulating layer on a second insulating layer in an X-axis direction, wherein the first width of the first insulating layer being less than the second width of second insulating layer. In an embodiment of the present application, after the first insulating layer is disposed on the second insulating layer, the second insulating layer is divided into a first fixed part, an overlapping part and a second fixed part sequentially in the Y-axis direction. The width of the first fixed part and/or the second fixed part may be greater than or equal to the perimeter of the wire, and the width of the overlapping part may be greater than or equal to the perimeter of the wire. Specifically, the widths of the first fixed part, the second fixed part and the overlapping part can be equal to the perimeter of the wire, and then the number of the insulating layers of the winding wire is exactly three, which is advantageous for the further saving of materials and costs, and which facilitates automatic processing. In another embodiment of the present application, after the first insulating layer is disposed on the second insulating layer, the second insulating layer is divided into a first fixed portion and an overlapping portion in the Y-axis direction.

Step S12: disposing a wire, in a direction parallel to the X-axis, on the portion of the second insulating layer that is not covered by the first insulating layer. In an embodiment of the present application, after the first insulating layer disposed on the second insulating layer, the second insulating layer is divided into a first fixed part, an overlapping part and a second fixed part sequentially in the Y-axis direction. The wire is disposed on the first fixed part or the second fixed part. The wire can be a substantially insulated solid wire or a substantially insulated strand wire, etc.

Step S13: wrapping around the wire with the first insulating layer and the second insulating layer in a Y-axis direction perpendicular to the X-axis direction, wherein wrapping around the wire begins from the first fixed part provided with the wire to the second fixed part; or wrapping around the wire begins from the second fixed part provided with the wire to the first fixed part.

Further, Step S12 further includes:

Step S121: disposing a first adhesive layer on the first fixed part and/or the second fixed part; and
Step S122: disposing the wire on the first adhesive layer.

Further, disposing a second adhesive layer between the overlapping part and the first insulating layer in Step S11, and/or further disposing a third adhesive layer on the first insulating layer in Step S11.

Furthermore, the first insulating layer and the second insulating layer wrap around the wire until the number of insulating layers of the winding wire is at least three.

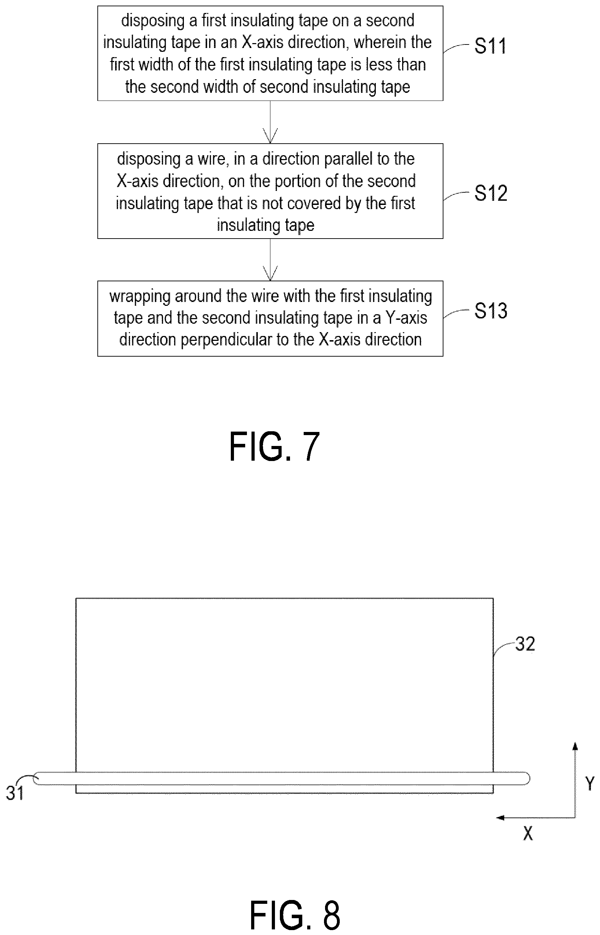

Referring to FIG. 7, which is a flow chart of a method for producing the winding wire in FIG. 3. As shown in FIG. 7, the method for producing a winding wire according to the present application includes:

Step S21: disposing a first insulating tape on a second insulating tape in an X-axis direction, wherein the first width of first insulating tape is less than the second width of second insulating tape;
Step S22: disposing a wire, in a direction parallel to the X-axis, on the portion of the second insulating tape that is not covered by the first insulating tape, the wire being a substantially insulated solid wire or a substantially insulated strand wire; and
Step S23: wrapping around the wire with the first insulating tape and the second insulating tape in a Y-axis direction perpendicular to the X-axis direction.

Furthermore, in Step S21, the first insulating tape includes a first backing layer and a first insulating substrate layer which are disposed opposite to each other, and the second insulating tape includes a second backing layer and a second insulating substrate layer which are disposed opposite to each other; in step S21, the first backing layer is bonded to the second backing layer, i.e., the first insulating tape is bonded to the second insulating tape to divide the second insulating substrate layer of the second insulating tape into a first fixed part, an overlapping part and a second fixed part sequentially in the Y-axis direction. In other words, the first insulating substrate layer and the second insulating substrate layer are the first insulating layer and the second insulating layer, respectively.

Moreover, in Step S22, the wire is disposed on the second fixed part in a direction parallel to the X-axis. Since there is a second backing layer between the second fixed part and the wire, the wire can be fixed to the second insulating layer more securely before winding. In Step S23, the first insulating tape and the second insulating tape wrapping around the wire begins from the second fixed part provided with the wire to the first fixed part. The contact part of the first insulating tape with the winding wire is an insulating substrate layer which is a smooth, flat surface, so it is easier to wind the wire smoothly to ensure that the processed wire surface is flat and compact. Moreover, since the first fixed part also has the backing layer thereon, it can be adhered to the second insulating substrate layer more conveniently to complete the winding and obtain a winding wire including insulating layers.

In other embodiments, the wire can also be disposed on the first fixed part in a direction parallel to the X-axis, and wrapping around the wire begins from the first fixed part provided with the wire until bonded to the second fixed part.

According to other aspects of the present application, the first insulating substrate layer is bonded to the second backing layer to divide the insulating substrate layer of the second insulating tape into a first fixed part, an overlapping part and a second fixed part sequentially.

Further, the width of the first fixed part and/or the second fixed part can be greater than or equal to the perimeter of the wire, and the width of the overlapping part can be greater than or equal to the perimeter of the wire. When the widths of the first fixed part, the second fixed part and the overlapping part are all equal to the perimeter of the wire, the number of insulating layers of the winding wire is exactly three, which is advantageous for the further saving of materials and costs, and which facilitates automatic processing.

Referring to FIG. 8, the winding wire of the present application includes a wire 31 and a first insulating layer 32, wherein the wire 31 is a substantially insulated solid wire or a substantially insulated strand wire. The first insulating layer 32 has an X-axis direction and a Y-axis direction perpendicular to the X-axis direction. The wire 31 is disposed on the first insulating layer 32 in the X-axis direction, and the first insulating layer 32 wraps around the wire 31 in the Y-axis direction.

By setting the width of the first insulating layer 32, the number of insulating layers of the winding wire can be at least three after the first insulating layer 32 wraps around the wire 31. For example, the first insulating layer 32 is the insulating substrate layer of an insulating tape, and the wire 31 is disposed on the first insulating layer 32 in a direction parallel to the X-axis, wherein the backing layer of the insulating tape is between the wire 31 and the first insulating layer 32.

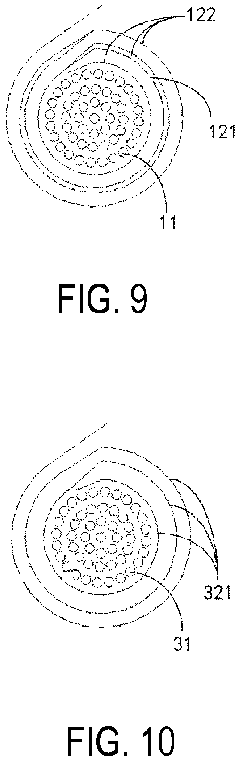

Referring to FIGS. 1 and 9, the first insulating layer 121 and the second insulating layer 122 wrap around the wire 11 until the number of insulating layers of the winding wire is at least three.

Referring to FIGS. 8 and 10, the first insulating layer 32 wraps around the wire 31 until the number of insulating layers of the winding wire is at least three.

The present application further discloses a winding of a magnetic element, including the winding wire shown in FIG. 1 or FIG. 3 or FIG. 8 as described above, that is, the winding is produced from said winding wire.

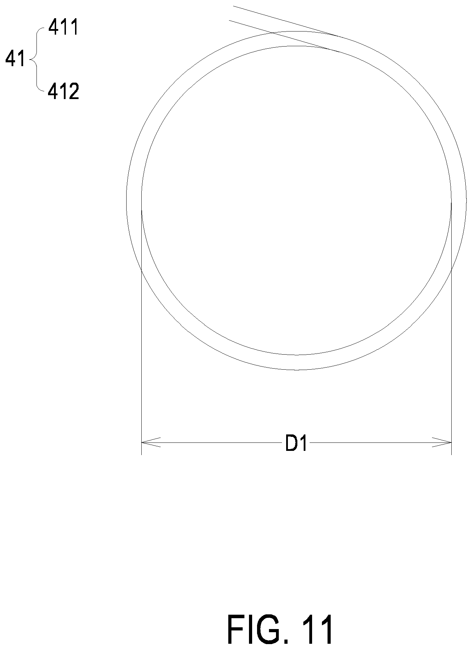

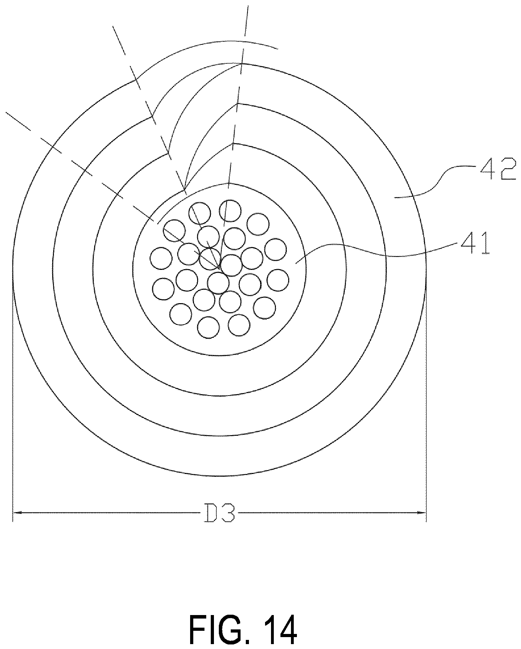

Referring to FIGS. 11 to 14, the present application further discloses a winding wire includes a plurality of wires 41 and an insulating layer 42. Each of the plurality of wires 41 may be one of the wires 11, 21 and 31 as described above, and the insulating layer 42 may be one of the insulation structure 12, 22 and the insulating layer 32 as described above.

Each of the plurality of wires 41 includes a wire core 411 and a coating 412 covering the wire core 411 as shown in FIG. 11. The wire core 411 may be made of copper material. The wire core 411 has a first diameter (D1) less than or equal to 0.2 mm such that the wire core 411 may have an improved flexibility. The coating 412 has a thickness less than or equal to 0.1 mm, in some embodiments, the thickness is from 0.02 mm to 0.03 mm. The coating 412 has an elongation greater than or equal to 15% such that the wire 41 having the wire core 411 covered with the coating 412 may bend easily. Also, the coating 412 has a withstanding voltage greater than or equal to 1 kV to improve the insulation property of the wire 41.

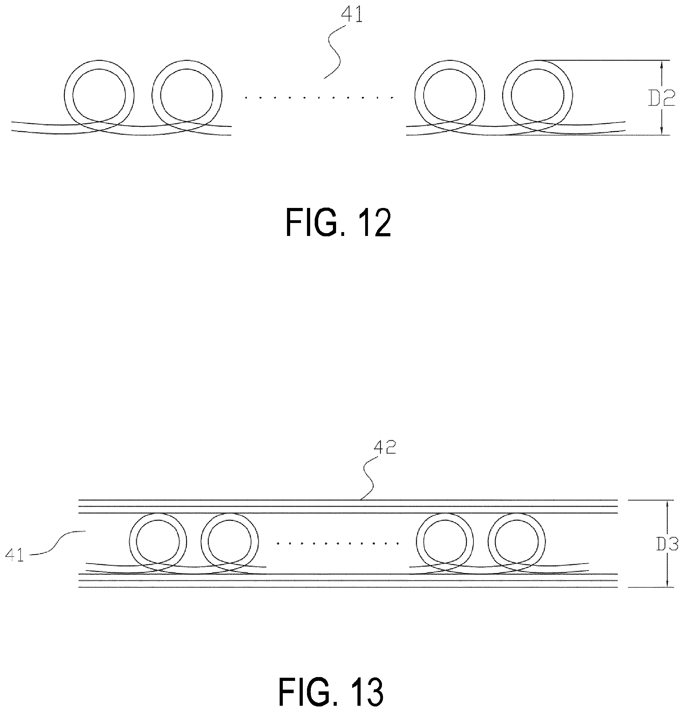

The plurality of wires 41 are arranged close to each other and are twisted spirally at least thirty-three (33) times in a length of one meter as shown FIG. 12. In other words, the plurality of wires 41 are gathered together and are twisted 360 degrees in a clockwise direction or an anti-clockwise direction at least thirty-three times in a length of one meter. Specifically, the plurality of wires 41 may be twisted spirally from thirty-three (33) times to eighty-five (85) times in a length of one meter. Wherein, FIG. 12 is only for schematic, which is not the actual winding shape.

The plurality of wires 41 are forced to be closer to each other after being twisted spirally, and a gap between adjacent wires 41 is less than 0.1 mm. The plurality of wires 41 twisted spirally may form a circle having a second diameter (D2) in a sectional direction, where $D2 \leq C*\sqrt{N*D1}$, and C is constant related to the number of times twisted, N is a number of the plurality of wires 41. In some embodiments, for example, when the plurality of wires 41 are twisted spirally thirty-three times in a length of one meter, C can be 1.115. Wherein, the value of C is inversely related to the number of times twisted of the stranded wire.

After the wires 41 are twisted spirally, the wires 41 are wrapped by the insulating layer 42 as shown in FIG. 13. The insulating layer 42 continuously wraps around the wires 41 until a number of layers covering the wires 41 is at least three.

The insulating layer 42 wraps around the wires 41 tightly such that each of the wires 41 located on a circumference of the circle is spaced apart from the insulating layer 42 by a gap less than 0.1 mm. Further, the layers covering the wires 41 are stacked on each other smoothly and closely without wrinkle or space between adjacent layers. The winding wire having the plurality of wires 41 wrapped by the insulating layer 42 may have a third diameter (D3). The third diameter D3 is less than a final diameter of each wire of the plurality of wires which is wrapped by at least three insulating layers, namely a diameter of the conventional three-layer insulated Kara line, and is also less than a final diameter of the plurality of wires 41 which are covered by at least three insulating layers in a spiral manner. In one embodiment, a thickness of the insulating layer 42 is less than or equal to 0.1 mm. The total thickness of multiple layers of the insulating layer 42 covering the plurality of wires 41 is obtained by multiplying the thickness of the insulating layer 42 by the number of layers covering the plurality of wires 41.

As shown in table below, based on the diameter of single wire 41 is about 0.1 mm, when the second diameter D2 of the spirally twisted multiple wires 41 is about 0.55-0.85 mm, the final diameter of the winding wire of the present application which is formed by wrapping the insulating layer in a flat and continuous manner, namely the third diameter D3, can be less than the diameter of three-layer insulated Kara line and also less than the diameter of wires covered by the insulating layer in the spiral manner. In other words, when the number of wires is equal to or greater than 33, the winding wire formed by the method in the present application can provide a smaller final diameter than the existing ones.

| Number of wires N | Second Diameter D2 (mm) | Third Diameter D3 (mm) | Diameter of conventional three-layer insulated Kara line (mm) | Diameter of wires covered by insulating layer in spiral manner (mm) |
|---|---|---|---|---|
| 7 | 0.2645751 | 0.8 | 0.66 | 0.99 |
| 9 | 0.3 | 0.84 | 0.71 | 1.02 |
| 11 | 0.3316625 | 0.872 | 0.76 | 1.05 |
| 13 | 0.3605551 | 0.9 | 0.79 | 1.08 |
| 17 | 0.4123106 | 0.9523 | 0.87 | 1.13 |
| 21 | 0.4582576 | 0.9985 | 0.94 | 1.18 |
| 27 | 0.5196152 | 1.0596 | 1.01 | 1.24 |
| 33 | 0.5744563 | 1.1144 | 1.12 | 1.29 |
| 40 | 0.6324555 | 1.1724 | 1.19 | 1.35 |
| 55 | 0.7416198 | 1.2816 | 1.41 | 1.46 |
| 70 | 0.83666 | 1.3766 | 1.55 | 1.56 |
| 84 | 0.9165151 | 1.4565 | 1.65 | 1.64 |
| 95 | 0.9746794 | 1.5146 | 1.78 | 1.69 |

More specifically, in the present application, through continuously and flatly wrapping the insulating layer/insulation structure around the wire at least three layers to form the winding wire, not only the thickness of insulating layers outside the wire can be effectively increased, but also the final diameter of the winding wire can be reduced. Accordingly, when the winding wire is wound on a bobbin, the reduced diameter can help to reduce the volume of winding, increase the distance between windings and also increase the leakage inductance, thereby reducing the number of applied external inductor or even replacing external inductor.

Furthermore, through covering the wire core by the coating to form the insulated solid wire and then wrapping the spirally twisted strand wires by at least three insulating layers to form the winding wire, the present application can further increase the withstand voltage of the winding wire. For example, compared with a conventional three-layer insulated Kara line having an outer insulation cover of 0.09 mm and a withstand voltage value of about 3100VAC, the thickness of insulating layers of the winding wire of the present application can reach about 0.15 mm, and the withstand voltage value can reach about 5000VAC. The experiments proved that the winding wire of the present application is capable of withstanding an arcing current of 7.7 mA for 60 seconds, which meets the safe requirements under IEC 65960 and IEC 60065. Consequently, the winding wire of the present application significantly improves the defects of the conventional three-layer insulated Kara line.

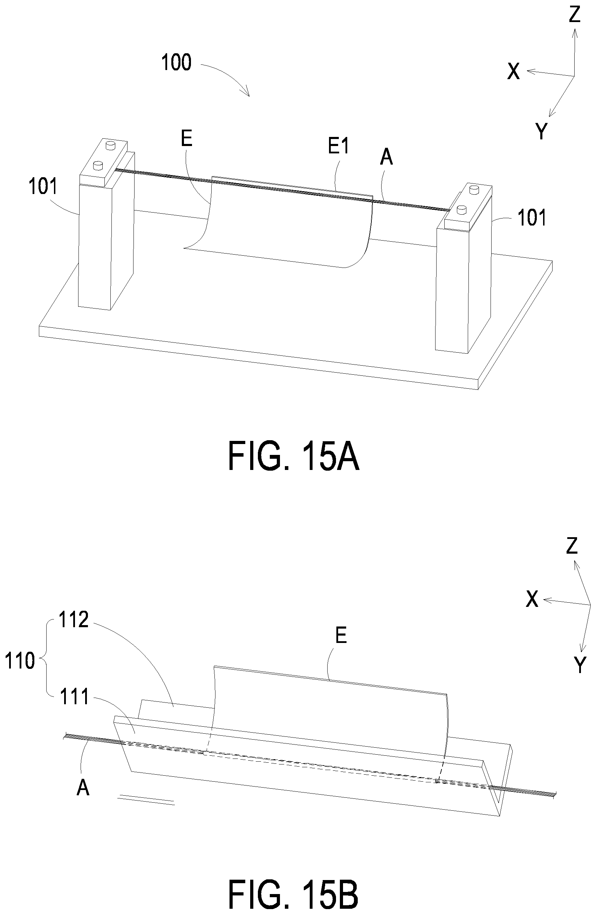

In practice, a wrapping tool can be employed to wrap the insulating layer/insulation structure around the wire. Referring to FIG. 15A to 15D, a wrapping tool 100 includes two fixing portions 101 for fixing two ends of a wire A, namely, two fixing portions 101 are arranged in the X-axis direction so as to fix the wire A also in the X-axis direction. The wire A is the spirally twisted strand wires as described above, such as, the plurality of wires 41 which are spirally twisted at least thirty-three (33) times in a length of one meter.

An insulating layer E has an X-axis direction and a Y-axis direction perpendicular to the X-axis direction. An edge E1 of the insulating layer E in a direction parallel to the X-axis is disposed on the wire A in a direction parallel to the wire A. The insulating layer E wraps around the wire A in the Y-axis direction, and the number of insulating layers wrapping the wire A is at least three. The insulating layer E can be the insulation structure 12, 22 or the insulating layer 32, 42, and is not limited to the drawings.

Moreover, a wrapping assistance tool 110 can be provided to assist in wrapping the insulating layer E around the wire A. The wrapping assistance tool 110 includes a first part 111 and a second part 112, and the first part 111 and the second part 112 have an included angle, which forms an included space therebetween for accommodating the insulating layer E and the wire A. For example, the first part 111 and the second part 112 can have an included angle of 90 degrees or an included angle in accordance with the diameter of the wire A. During operation, the insulating layer E is firstly disposed to the wire A through the edge E1 and wraps the wire A roughly, and then, the wire A and insulating layer E together are disposed in the included space between the first part 111 and the second part 112. One of the first part 111 and the second part 112 provides the force for immobilizing and fitting, and the other provides the function of guiding, such that the wrapping of the insulating layer E can be completed through rotating the wrapping assistance tool 110. The wrapping assistance tool 110 helps the insulating layer E to smoothly wrap around the wire A and thus ensures that the processed wire surface is flat and compact.

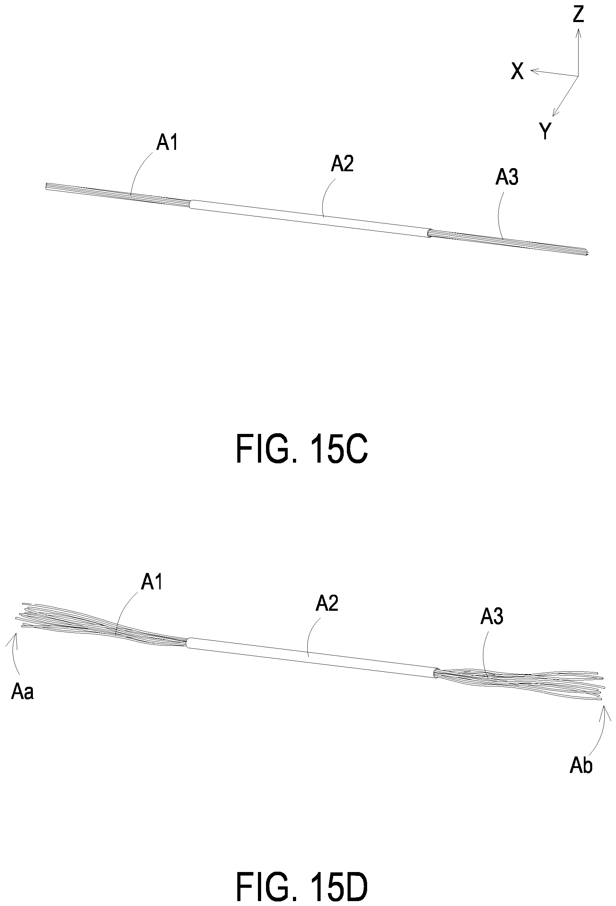

After the wrapping of the insulating layer E is completed, e.g., the number of insulating layers wrapped around the wire A is at least three, the wire A fixed on the wrapping tool 100 is sequentially divided into a first exposed portion A1, a wrapped portion A2 and a second exposed portion A3 in the X-axis direction, as shown in FIG. 15C.

Then, the first exposed portion A1 and the second exposed portion A3 are respectively cut to form a first exposed end Aa and a second exposed end Ab, and thus, the wrapped wire is separated from the wrapping tool 100. As shown in FIG. 15D, the wires of the first exposed end Aa and the second exposed end Ab are respectively in a dispersed state.

Following, the first exposed end Aa and the second exposed end Ab are respectively subjected to a twisting process and a soldering process, so as to complete the preparation before being wound onto the bobbin. Since the twisting processes for the first exposed end Aa and the second exposed end Ab are identical, only the first exposed end Aa is described below for simplification.

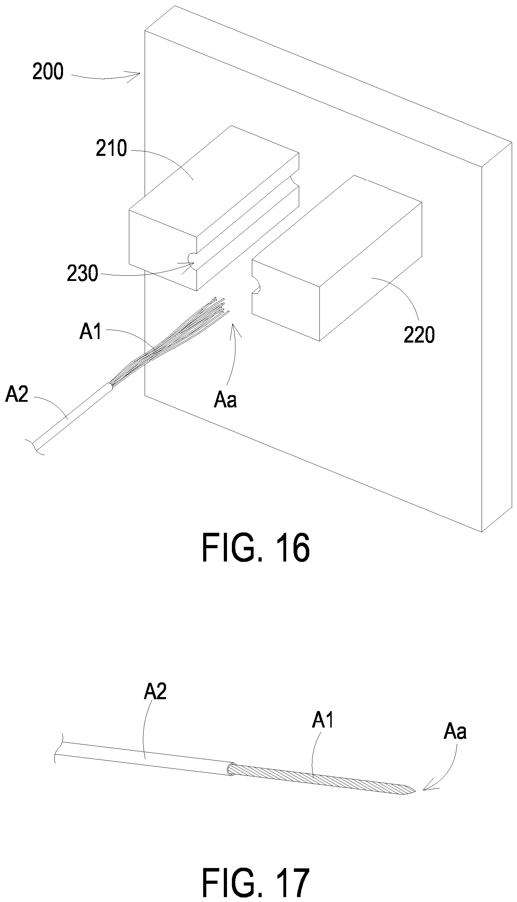

The twisting process is used to form the multiple dispersed wires into the spirally twisted wires as shown in FIGS. 12 to 14, e.g., wires which are spirally twisted at least thirty-three (33) times in a length of one meter. In an embodiment, the twisting process is performed through a twisting tool. Referring to FIG. 16, a twisting tool 200 includes a first twisting portion 210 and a second twisting portion 220. The first exposed end Aa to be twisted is disposed between the first twisting portion 210 and the second twisting portion 220, and the twisting process is completed by clamping both sides of the first exposed end Aa by the first twisting portion 210 and the second twisting portion 220 and rotating simultaneously. In an embodiment, the first twisting portion 210 and the second twisting portion 220 respectively have a recess along a longitudinal direction thereof, for example, an arc-shaped recess, so as to form a space for accommodating the exposed ends to be twisted when facing each other. After completing the twisting process, the end of the first exposed end Aa has a cone shape (as shown in FIG. 17), and the wires of the first exposed end Aa become close to each other, for example, the gap between adjacent wires is less than 0.1 mm. The diameter of wires which are twisted through the described twisting process has a tolerance within +/-0.18 mm.

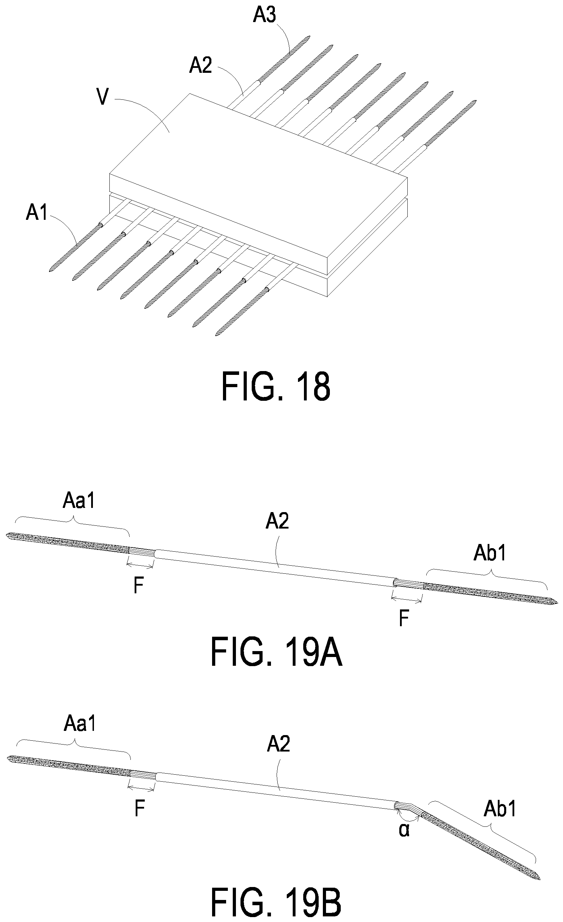

The first exposed end Aa and the second exposed end Ab both in cone shapes are further subjected to the soldering process. In an embodiment, the soldering process is performed as follows. Referring to FIG. 18, a plurality of wires which are twisted at both ends are arranged at intervals and clamped by a carrier V, and the cone shape ends to be soldered are exposed at two opposite sides of the carrier V The carrier V is subjected to wave soldering for simultaneously soldering the plurality of wires. The conditions of soldering can be different according to practical requirements without limitation.

After soldering, the first exposed end Aa and the second exposed end Ab respectively form a first soldered portion Aa1 and a second soldered portion Ab1 which serve as pins as the completed winding wire is wound onto the bobbin. Referring to FIGS. 19A-19B, in the present application, the soldering process for the first exposed end Aa and the second exposed end Ab leaves a portion close to the wrapped portion A2 not soldered, namely an interval F is respectively left between two ends of the wrapped portion A2 and the first soldered portion Aa1 and the second soldered portion Ab1. The interval F is to ensure a sufficient space for the soldered portion to be bent into a pin when the winding wire is wound onto the bobbin, so that a required bending angle for the pin can be achieved without being influenced by the soldering and/or the wrapped insulating layers. At the same time, the interval F also avoids the wrapped insulating layers from being broken as bending the soldered portion. The bending angle $\alpha$ is defined as an included angle required by the pin between the soldered portion Aa1, Ab1 and the wrapped portion A2, and thus, the interval F is substantially inversely related to the bending angle $\alpha$, that is, the smaller the required bending angle $\alpha$ needed for the pin, the larger the interval F should be left. On the other hand, the interval F is also proportional to the diameter of the wire A, that is, the greater the diameter, the larger the interval F should be left. In an embodiment, when the interval F is ranged between 0.5 mm and 3 mm, the bending angle $\alpha$ is larger than or equal to 90 degrees.

Following, the winding wire which is twisted and soldered at both ends thereof is subjected to a winding process. The descriptions below are based on two winding wires, but not limited thereto. One (soldered) end of respective winding wires is disposed onto the bobbin first, wherein different winding wires can be marked for identification. Then, the winding wires are wound in a manner according to the type of transformer to be formed. After winding, the other (soldered) end of respective winding wires is disposed onto the bobbin again, and fixed by a tape. Based on different requirements, the two ends of the winding wire can be disposed at the same side or different sides of the bobbin without limitation.

In summary, the procedure from forming the winding wire from the wire to winding the winding wire to the bobbin includes: a plurality of wires are spirally twisted at least thirty-three (33) times in a length of one meter to from twisted wires, the twisted wires are wrapped by at least three insulating layers, two ends of the wrapped portion are respectively cut to form exposed ends, the exposed ends are subjected to the twisting process and the soldering process for completing the preparation before winding, and the completed winding wire is wound onto the bobbin to form the winding in which the soldered ends serve as pins. Accordingly, the winding formed in the present application is able to be applied to the magnetic components, such as transformers, inductors.

In some embodiments, by cooperating the winding wire of the present application with structure designing of the transformer, the requirement of reducing the overall height of the transformer can be effectively achieved while the inductance of the switching mode power supply is also maintained.

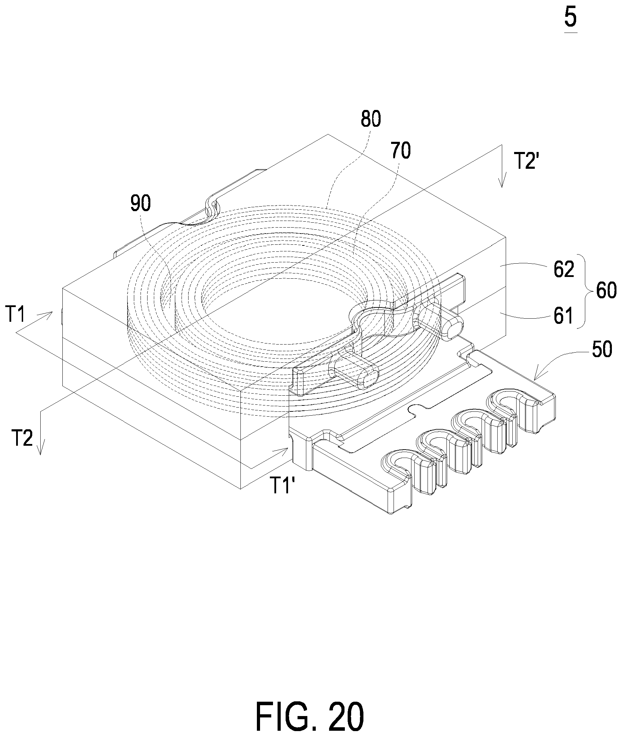

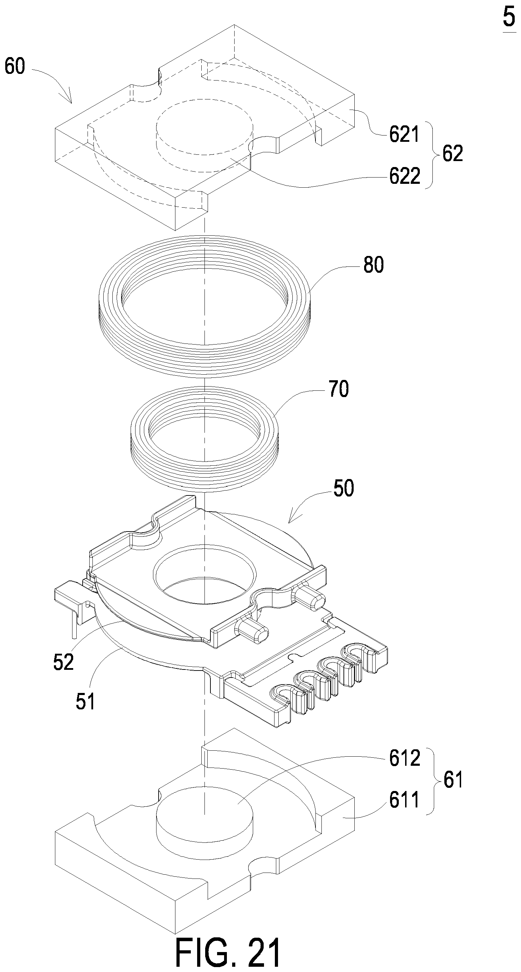

Referring to FIG. 20 to FIG. 22, which are respectively a schematic view of a thin-type transformer, an exploded schematic view of the thin-type transformer, and a schematic view of a bobbin according to an embodiment of the present application, a thin-type transformer 5 includes a bobbin 50, a pair of cores 60, a first winding 70 and a second winding 80. The bobbin 50 includes a first plate body 51 and a hollow column protruded from the first plate body 51. Moreover, the bobbin 50 includes a second plate body 52 opposite to the first plate body 51. The hollow column 53 is located between the first plate body 51 and the second plate body 52.

The pair of cores 60 include a first core 61 and a second core 62 and are disposed at opposite sides of the bobbin 50. The first core 61 includes a first base 611 and a first core pillar 612 connected to the first base 611. The second core 62 includes a second base 621 and a second core pillar 622 connected to the second base 621. The first base 611 is attached to the first plate body 51, the second base 621 is attached to the second plate body 52, and the first pillar 612 and the second pillar 622 are penetrating in the hollow column 53.

The first winding 70 (or referred as the primary winding) surrounds the hollow column 53, and the first winding 70 is disposed on the first plate body 51 and between the pair of cores 60. The second winding 80 (or referred as the secondary winding) surrounds the first winding 70 and is disposed on the first plate body 51. A spacing distance 90 is maintained between the first winding 70 and the second winding 80. In some embodiments, the spacing distance 90 is not less than 0.2mm and not more than 13.5mm. In the embodiment, the first winding 70 and/or the second winding 80 adopts the winding wire as described above, which has the smaller diameter and is more compact, so that the thickness of the thin-type transformer 5 can be less than 20 mm. More specifically, it can adopt the winding wire described above in the first winding 70 or the second winding 80 that withstands high voltage.

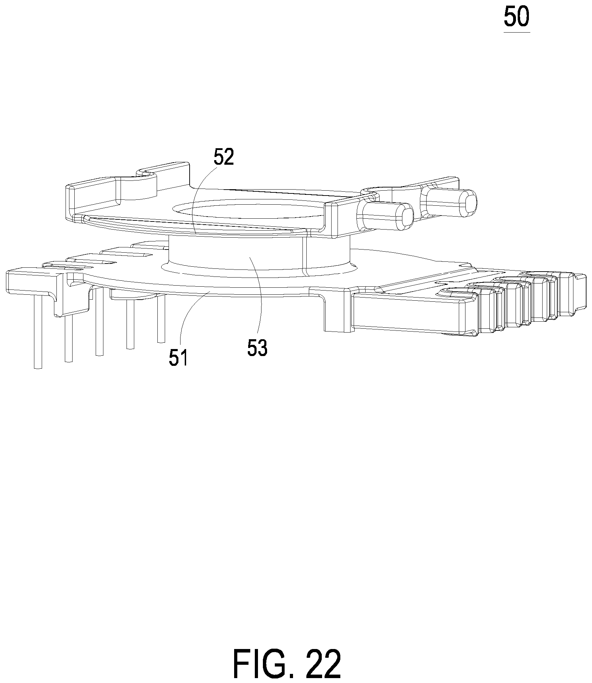

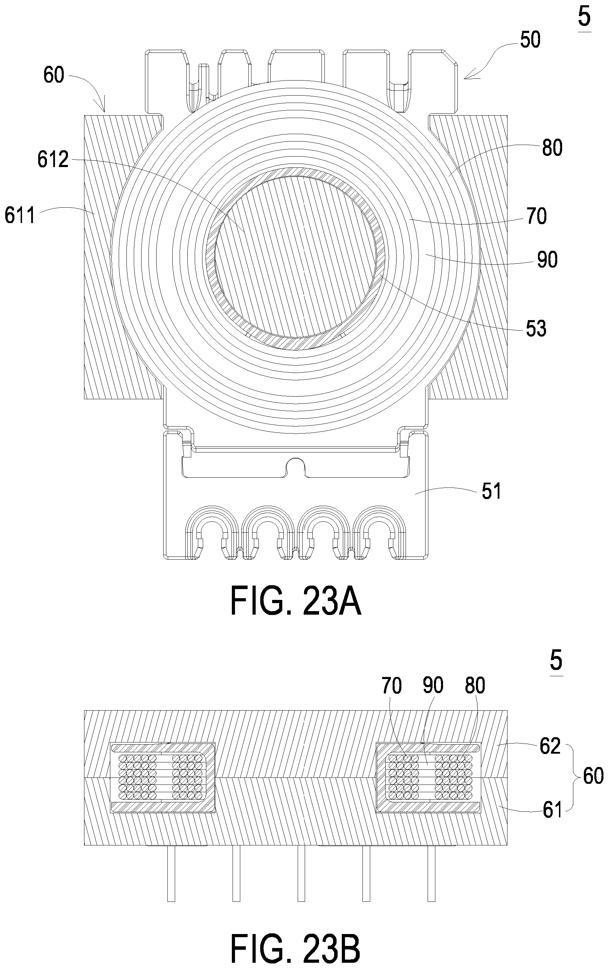

Refer to FIG. 22 and FIGS. 23A-23B, in which FIGS. 23A-23B are respectively a T1-T1' sectional view and a T2-T2' sectional view of the thin-type transformer in an embodiment of the present application. As shown, the first winding 70 and the second winding 80 surround the hollow column 53 in a radial direction, and the first winding 70 and the second winding 80 are concentrically disposed on the first plate body 51.

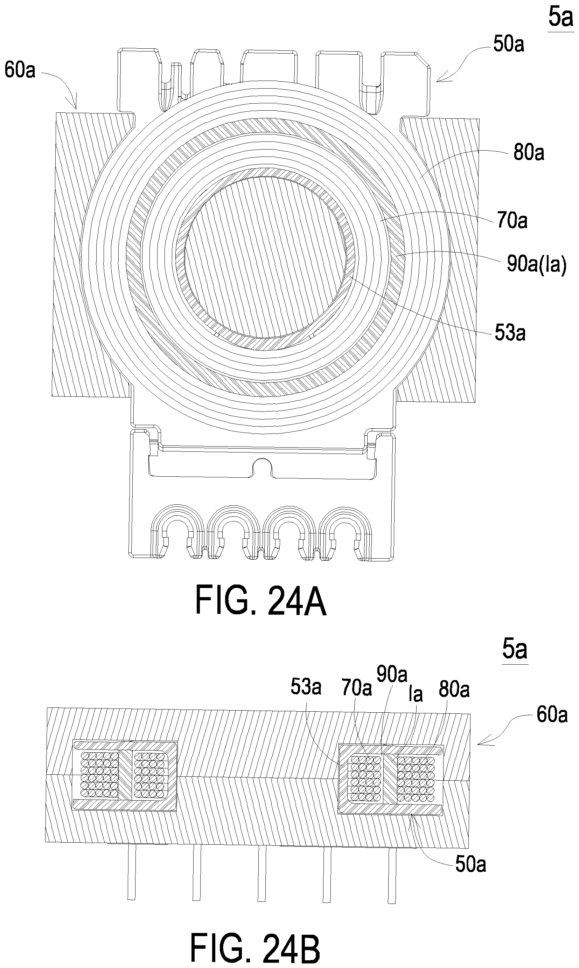

Further refer to FIGS. 24A-24B which are respectively a T1-T1' sectional view and a T2-T2' sectional view of a thin-type transformer in another embodiment of the present application. In this embodiment, a thin-type transformer 5a includes a bobbin 50a, a pair of cores 60a, a first winding 70a and a second winding 80a. The bobbin 50a includes a hollow column 53a. The pair of cores 60a are disposed at opposite sides of the bobbin 50a. The first winding 70a and the second winding 80 concentrically surround the hollow column 53a in a radial direction and are disposed between the pair of cores 60a. Further, a spacing distance 90a is maintained between the first winding 70 and the second winding 80.

The difference is the transformer 5a further includes an insulating separation layer Ia. The insulating separation layer Ia is made of insulating material and is disposed within the spacing distance 90a. Also, the thickness of the insulating separation layer Ia is not less than 0.2 mm and not more than 13.5 mm. Accordingly, two sides of the insulating separation layer Ia are respectively abutted against the first winding 70a and the second winding 80a, so as to ensure the spacing distance 90a between the first winding 70a and the second winding 80a, thereby increasing the leakage inductance of the thin-type transformer 5a.

In some embodiments, the spacing distance or the disposition of the insulating separation layer can increase the leakage inductance by more than 15%, which can be used to replace the resonant inductor of the LLC circuit in the conventional transformer, that is, in the thin-type transformer of the present application, the LLC circuit can be realized without an external resonant inductor.

On the other hand, the winding wire having at least three wrapped insulating layers can be applied in an insulation circuit, for example, for forming a primary winding (such as the first winding 70, 70a described above) and/or a secondary winding (such as the second winding 80, 80a described above) in a transformer within the isolation circuit, and/or a winding in an inductor, thereby providing the isolation circuit with a characteristic of withstanding high voltage.

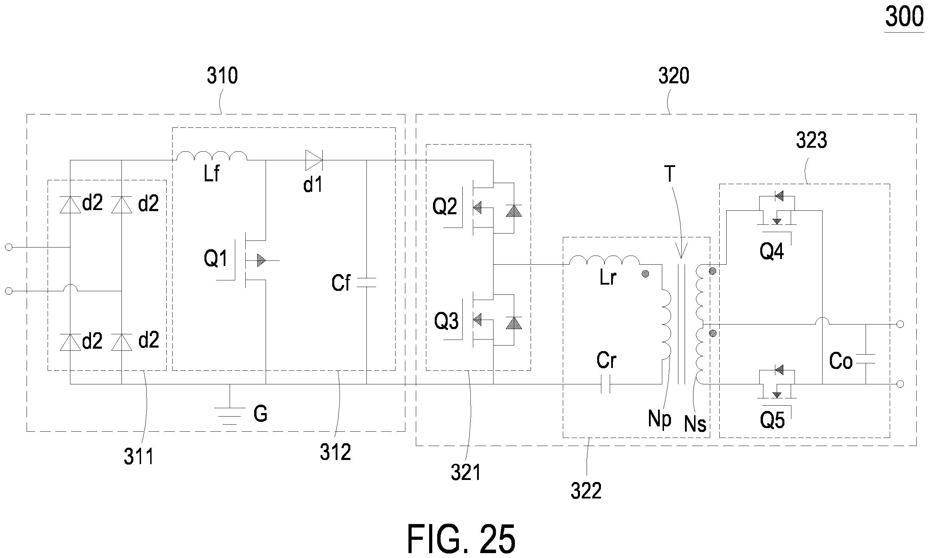

In an embodiment, the switching mode power supply is an isolation circuit. Referring to FIG. 25, an isolation circuit 300 includes a power factor correction (PFC) circuit 310 and a resonant conversion circuit 320. The resonant conversion circuit 320 can be a LLC resonant circuit. The power factor correction circuit 310 includes a rectifier circuit 311 and a boost circuit 312 sequentially connected in series. The rectifier circuit 311 is electrically connected to an input terminal of the isolation circuit 300 to receive an AC input voltage and convert thereof into a DC voltage. The boost circuit 312 is electrically connected to the rectifier circuit 311 for increasing the DC voltage.

The resonant conversion circuit 320 includes a primary circuit 321, a resonant circuit 322, and a secondary circuit 323 which are sequentially connected in series. The primary circuit 321 is electrically connected to the power factor correction circuit 310. The resonant circuit 322 includes a resonant inductor Lr, a resonant capacitor Cr and a transformer T. The transformer T includes a primary winding Np and a secondary winding Ns. The primary winding Np is electromagnetically coupled with the secondary winding Ns. The resonant inductor Lr, the resonant capacitor Cr and the primary winding Np are connected in series. The secondary winding Ns induces a secondary voltage according to the voltage on the primary winding Np. The secondary circuit 323 is electrically connected between the secondary winding Ns and an output terminal of the isolation circuit 300, and is used to receive the secondary voltage generated by the secondary winding Ns and convert thereof into an output voltage, so as to be outputted at the output terminal of the isolation circuit 300. The resonant inductor Lr may be an external physical inductor component, or may be achieved by the leakage inductance which is formed by the spacing distance or the insulating separation layer between the primary winding and the secondary winding as described in the present application. When the resonant inductor Lr is the external physical inductor component, the resonant inductor can adopt the winding wire described above, namely, the winding wire having the wire (such as one of the wires 11, 21, 31, 41 and A described above) and the insulating layer (such as one of the insulation structures 12, 22 and the insulating layers 32, E) wrapped around the wire.

In some embodiments, in the isolation circuit described above, the primary winding Np and/or the secondary winding Ns adopts the winding wire described above, namely, the winding wire having the wire (such as one of the wires 11, 21, 31, 41 and A described above) and the insulating layer (such as one of the insulation structures 12, 22 and the insulating layers 32, E) wrapped around the wire. In the present application, through the configuration of at least three insulating layers wrapped around the wire, an improvement of the withstand voltage value can be achieved. For example, compared with a conventional three-layer insulated Kara line having an outer insulation cover of 0.09 mm and a withstand voltage value of about 3100VAC, the thickness of insulating layers of the winding wire of the present application is about 0.15 mm, and the withstand voltage value can reach about 5000VAC. Therefore, when the isolation circuit adopts the winding wire having at least three insulating layers to form the inductor, the withstand voltage value between the primary circuit and the secondary circuit can reach about 4000VAC to 5000VAC as short-circuiting the input terminal and the output terminal of the isolation circuit to perform a withstand voltage test.

Specifically, the rectifier circuit 311 is electrically connected to the input terminal of the isolation circuit 300 and includes a full-bridge rectifier composed of four diodes d2. In other embodiments of the present application, the rectifier circuit 311 can also be a full-bridge rectifier or a half-bridge rectifier composed of four controllable switches, such as MOS. The boost circuit 312 includes an energy storage inductor Lf, a first switch Q1, a first output capacitor Cf, and a diode d1. The first terminal of the energy storage inductor Lf is electrically connected to the rectifier circuit 311. A first power terminal of the first switch Q1 is electrically connected to a second terminal of the energy storage inductor Lf, and a second power terminal of the first switch Q1 is electrically connected to ground G. An anode terminal of the diode d1 is electrically connected to the first power terminal of the first switch Q1 and the second terminal of the energy storage inductor Lf. A first terminal of the first output capacitor Cf is electrically connected to a cathode terminal of the diode d1, and a second terminal of the first output capacitor Cf is electrically connected to ground G. The primary circuit 321 is an inverter circuit including a second switch Q2 and a third switch Q3. The second switch Q2 and the third switch Q3 are electrically connected in series between the cathode terminal of the diode d1 and ground G, and the resonant inductor Lr and the resonant capacitor Cr are electrically connected with the primary winding Np in series between a connection point between the second switch Q2 and the third switch Q3 and ground G. In other embodiments, the inverter circuit also can be a full-bridge inverter. The secondary circuit 323 includes a fourth switch Q4, a fifth switch Q5, and a second output capacitor Co. A first power terminal of the fourth switch Q4 is electrically connected to a first terminal of the secondary winding Ns, and a second power terminal of the fourth switch Q4 is electrically connected to a negative output terminal of an output terminal of the isolation circuit 300. A first power terminal of the fifth switch Q5 is electrically connected to a second terminal of the secondary winding Ns, and a second power terminal of the fifth switch Q5 is electrically connected to the negative output terminal of the output terminal of the isolation circuit 300. The secondary winding Ns also includes a center tap terminal electrically connected to a positive output terminal of the output terminal of the isolation circuit 300. The second output capacitor Co is electrically connected between the positive output terminal and the negative output terminal.

Notably, when the resonant inductor Lr is achieved by the leakage inductance formed by the spacing distance or the insulating separation layer between the primary winding and the secondary winding, the primary winding Np and/or the secondary winding Ns in LLC circuit include the winding wire described above. The winding wire having the wire (such as one of the wires 11, 21, 31, 41 and A described above) and the insulating layer (such as one of the insulation structures 12, 22 and the insulating layers 32, E) wrapped around the wire can increase the leakage inductance, and thus, the value of the

$$Q = \frac{\sqrt{\frac{Lr}{Cr}}}{R}$$

resonant inductor Lr. Further, based on , where Q is quality factor, Lr is resonant inductance, Cr is resonant capacitance, and R is load, it is clear that the increase of Lr can improve the quality factor of the circuit accordingly.

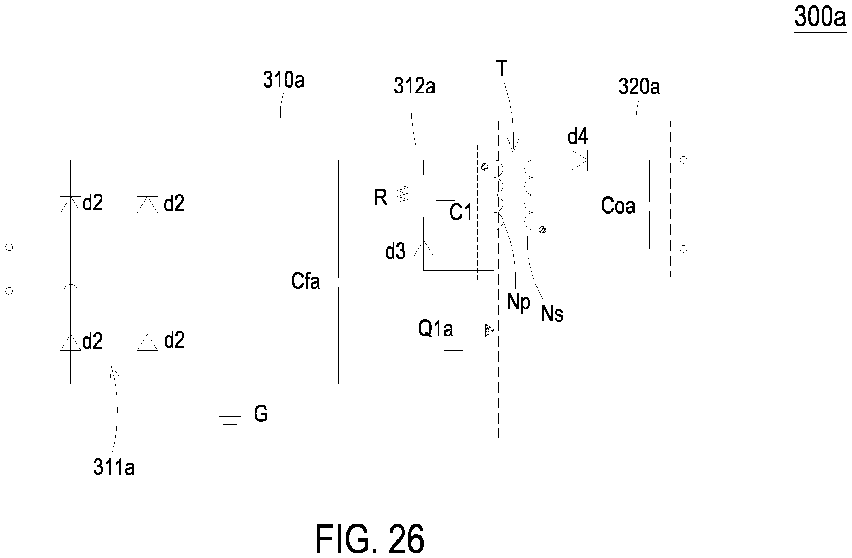

In another embodiment, as shown in FIG. 26, an isolation circuit 300a is a flyback circuit and includes a primary circuit 310a, a transformer T and a secondary circuit 320a, wherein the structure and function of the transformer T are similar to those of the transformer T shown in FIG. 25 and are only indicated by the same symbols and omitted. The primary circuit 310a includes a rectifier circuit 311a, a filter capacitor Cfa, a switch Q1a, and an RCD absorption circuit 312a composed of a resistor R, a bleeder capacitor C1 and a diode d3. The rectifier circuit 311a is electrically connected to an input terminal of the isolation circuit 300a and includes a full-bridge rectifier composed of four diodes d2. In other embodiments of the present application, the rectifier circuit 311a can also be a full-bridge rectifier or a half-bridge rectifier composed of four controllable switches, such as MOS. A first terminal of the filter capacitor Cfa is electrically connected to the rectifier circuit 313a and the first terminal of the primary winding Np, and a second terminal of the filter capacitor Cfa is electrically connected to ground G. The switch Q1a is electrically connected between the second terminal of the primary winding Np and ground G. The resistor R and the bleeder capacitor C1 are electrically connected in parallel between the first terminal of the filter capacitor Cfa and a cathode terminal of the diode d3. An anode terminal of the diode d3 is electrically connected between the switch Q1a and the second terminal of the primary winding Np.

In some embodiments, the secondary circuit 320a includes a diode d4 and an output capacitor Coa. An anode terminal of the diode d4 is electrically connected to the first terminal of the secondary winding Ns, and a cathode terminal of the diode d4 is electrically connected to the output positive terminal of the output terminal of the isolation circuit 300a. The output capacitor Coa is electrically connected between the output positive terminal and the output negative terminal. In addition, the second terminal of the secondary winding Ns is electrically connected to the output negative terminal of the output terminal of the isolation circuit 300a.

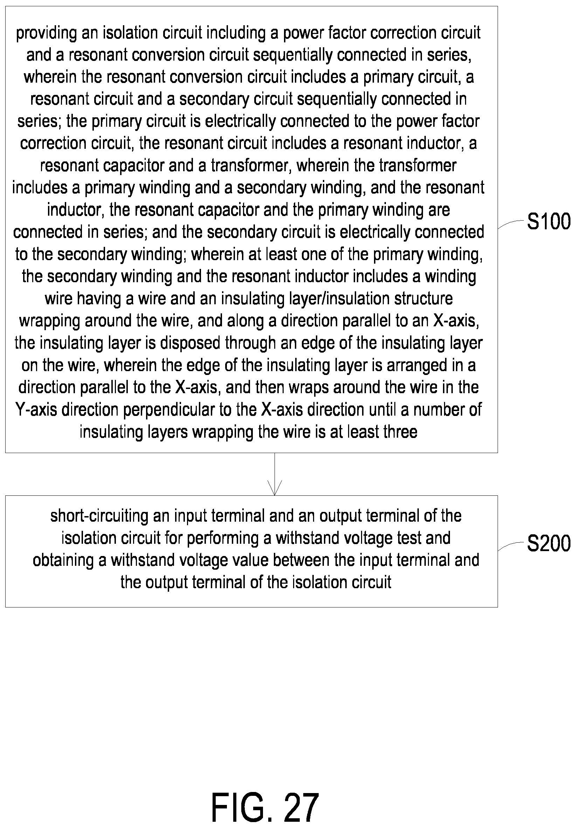

Referring to FIG. 27, a withstand voltage testing method applied to the isolation circuit in the present application includes steps of:

Step S100: providing an isolation circuit (e.g., the isolation circuit 300, 300a described above), wherein the isolation circuit includes a power factor correction circuit and a resonant conversion circuit sequentially connected in series, wherein the resonant conversion circuit includes a primary circuit, a resonant circuit and a secondary circuit sequentially connected in series; the primary circuit is electrically connected to the power factor correction circuit, the resonant circuit includes a resonant inductor, a resonant capacitor and a transformer, wherein the transformer includes a primary winding and a secondary winding, and the resonant inductor, the resonant capacitor and the primary winding are connected in series; and the secondary circuit is electrically connected to the secondary winding; wherein at least one of the primary winding, the secondary winding and the resonant inductor includes a winding wire having a wire and an insulating layer/insulation structure wrapping around the wire, and along a direction parallel to an X-axis, the insulating layer is disposed through an edge of the insulating layer on the wire, wherein the edge of the insulating layer is arranged in a direction parallel to the X-axis, and then wraps around the wire in the Y-axis direction perpendicular to the X-axis direction until a number of insulating layers wrapping the wire is at least three.

Step S200: short-circuiting the input terminal and the output terminal of the isolation circuit for performing a withstand voltage test and obtaining a withstand voltage value between the input terminal and the output terminal of the isolation circuit.

In conclusion, the winding wire of the present application is advantageous of being easy to realize automatic processing and being formed through a smooth wrapping, so that the processed wire surface is flat and compact, which helps to increase the power density of magnetic elements, and further, not only the cost of material is low, but also the insulation requirements can be ensured. Moreover, the method for producing the winding wire of the present application achieves the goal of reducing the final diameter of the winding wire under the premise of increasing the thickness of the outer insulating layer of the wire by wrapping at least three insulating layers, which not only reduces the volume of winding, increases the distance between windings, but also reduces the overall height of the transformer and increases the leakage inductance. Furthermore, the winding wire produced by the present application which is wrapped by at least three insulating layers further provides high withstand voltage value to meets the safety requirements.

It is to be understood that the application needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

**Claims**

1.  An isolation circuit (300, 300a), **characterized by** comprising a power factor correction circuit (310) and a resonant conversion circuit (320) sequentially connected in series, wherein the resonant conversion circuit (320) comprises:

    a primary circuit (321, 310a) electrically connected to the power factor correction circuit (310);
    a resonant circuit (322) comprising a resonant inductor (Lr), a resonant capacitor (Cr) and a transformer (T), wherein the transformer (T) comprises a primary winding (Np) and a secondary winding (Ns), and the resonant inductor (Lr), the resonant capacitor (Cr) and the primary winding (Np) are connected in series; and
    a secondary circuit (323, 320a) electrically connected to the secondary winding (Ns),
    wherein the primary circuit(321, 310a), the resonant circuit (322) and the secondary circuit (323, 320a) sequentially connected in series, at least one of the primary winding (Np) and the secondary winding (Ns) comprises a winding wire having a wire (41, A) and an insulating layer (E) wrapping around the wire (41, A), along a direction parallel to an X-axis, the insulating layer (E) is disposed through an edge (E1) of the insulating layer (E) on the wire (41, A), wherein the edge (E1) of the insulating layer (E) is arranged in a direction parallel to the X-axis, and then wraps around the wire (41, A) in a Y-axis direction perpendicular to the X-axis direction until a number of insulating layers wrapping the wire is at least three, and a withstand voltage value between an input terminal and an output terminal of the isolation circuit (300, 300a) is ranged between 4000VAC and 5000VAC.

2.  The isolation circuit (300, 300a) as claimed in claim 1, wherein the power factor correction circuit (310) comprises a rectifier circuit (311) and a boost circuit (312) sequentially connected in series;
    wherein the boost circuit (312) comprises:

    an energy storage inductor (Lf), a first terminal of the energy storage inductor (Lf) electrically connected to the rectifier circuit (311);
    a first switch (Q1), a first power terminal of the first switch (Q1) electrically connected to a second terminal of the energy storage inductor (Lf), and a second power terminal of the first switch (Q1) electrically connected to ground (G);
    a diode (d1), an anode terminal of the diode (d1) electrically connected to the first power terminal of the first switch (Q1); and
    a first output capacitor (Cf), a first terminal of the first output capacitor (Cf) electrically connected to a cathode terminal of the diode, and a second terminal of the first output capacitor (Cf) electrically connected to ground (G).

3.  The isolation circuit (300, 300a) as claimed in claim 2, wherein

    the primary circuit (321) comprises an inverter circuit electrically connected to the boost circuit (312), and the inverter circuit comprises:

    a second switch (Q2); and
    a third switch (Q3), electrically connected with the second switch (Q2) in series between the cathode terminal of the diode (d1) and ground (G);

    the secondary circuit (323) comprise:

    a fourth switch (Q4), a first power terminal of the fourth switch (Q4) electrically connected to a first terminal of the secondary winding (Ns), and a second power terminal of the fourth switch (Q4) electrically connected to a negative output terminal of the isolation circuit (300, 300a);

a fifth switch (Q5), a first power terminal of the fifth switch (Q5) electrically connected to a second terminal of the secondary winding (Ns), and a second power terminal of the fifth switch (Q5) electrically connected to the negative output terminal of the isolation circuit (300, 300a); and

a second output capacitor (Co), electrically connected between a positive output terminal and the negative output terminal; and

the secondary winding (Ns) comprises a center tap terminal electrically connected to the positive output terminal of the isolation circuit (300, 300a).

4. The isolation circuit (300, 300a) as claimed in claim 1, wherein the winding wire comprises a plurality of wires (41), and the plurality of wires (41) are spirally twisted at least thirty-three times in a length of one meter.

5. The isolation circuit (300, 300a) as claimed in claim 4, wherein each wire of the plurality of wires (41) comprises a wire core (411) and a coating (412), the wire core (411) has a first diameter (D1), the plurality of wires (41, A) which are spirally twisted have a second diameter (D2), and the winding wire has a third diameter (D3), and wherein the third diameter (D3) is less than a final diameter of each wire of the plurality of wires (41) which is wrapped by at least three insulating layers, and the third diameter (D3) is less than a final diameter of the plurality of wires (41) which are covered by at least three insulating layers in a spiral manner.

6. The isolation circuit (300, 300a) as claimed in claim 5, wherein the number of the plurality of wires (41, A) is greater than or equal to thirty-three, and the second diameter is at least 0.55 mm.

7. The isolation circuit (300, 300a) as claimed in claim 1, wherein the insulating layer (E) is an insulation tape.

8. The isolation circuit (300, 300a) as claimed in claim 1, wherein a spacing distance (90, 90a) is maintained between the primary winding (Np) and the secondary winding (Ns).

9. The isolation circuit (300, 300a) as claimed in claim 8, wherein an insulating separation layer (Ia) is disposed within the spacing distance (90a).

10. The isolation circuit (300, 300a) as claimed in claim 9, wherein the resonant inductor (Lr) is achieved by a leakage inductance formed by the spacing distance (90, 90a) and/or the insulating separation layer (Ia).

11. The isolation circuit (300, 300a) as claimed in claim 1, wherein the resonant inductor (Lr) is an external inductor, and the resonant inductor (Lr) comprises the winding wire.

12. A withstand voltage testing method for an isolation circuit (300, 300a), **characterized by** comprising:

providing an isolation circuit (300, 300a), wherein the isolation circuit (300, 300a) comprises a power factor correction circuit (310) and a resonant conversion circuit (320) sequentially connected in series, wherein the resonant conversion circuit (320) comprises a primary circuit (321, 310a), a resonant circuit (322) and a secondary circuit (323, 320a) sequentially connected in series; the primary circuit (321, 310a) is electrically connected to the power factor correction circuit (310), the resonant circuit (322) includes a resonant inductor (Lr), a resonant capacitor (Cr) and a transformer (T), wherein the transformer (T) includes a primary winding (Np) and a secondary winding (Ns), and the resonant inductor (Lr), the resonant capacitor (Cr) and the primary winding (Np) are connected in series; and the secondary circuit (323, 320a) is electrically connected to the secondary winding (Ns); wherein at least one of the primary winding (Np) and the secondary winding (Ns) comprises a winding wire comprising a wire (41, A) and an insulating layer (E) wrapping around the wire (41, A), and along a direction parallel to an X-axis, the insulating layer (E) is disposed through an edge (E1) of the insulating layer (E) on the wire (41, A), wherein the edge (E1) of the insulating layer (E) is arranged in a direction parallel to the X-axis, and then wraps around the wire (41, A) in a Y-axis direction perpendicular to the X-axis direction until a number of insulating layers of the winding wire is at least three; and

short-circuiting an input terminal and an output terminal of the isolation circuit (300, 300a) for performing a high voltage test and obtaining a withstand voltage value between the input terminal and the output terminal of the isolation circuit (300, 300a), wherein the withstand voltage value is ranged between 4000VAC and 5000VAC.

$$12 \begin{cases} 121 \\ 122 \\ 123 \\ 124 \\ 125 \end{cases}$$

FIG. 1

FIG. 2

FIG. 3

FIG. 4

disposing a first insulating layer on a second insulating layer in an X-axis direction, wherein the first width of the first insulating layer is less than the second width of second insulating layer — S11

disposing a wire, in a direction parallel to the X-axis direction, on the portion of the second insulating layer that is not covered by the first insulating layer — S12

wrapping around the wire with the first insulating layer and the second insulating layer in a Y-axis direction perpendicular to the X-axis direction — S13

# FIG. 5

disposing a first adhesive layer on the first fixed part and/or the second fixed part — S121

disposing the wire on the first adhesive layer — S122

# FIG. 6

```
┌─────────────────────────────────────┐
│ disposing a first insulating tape on a second  │
│ insulating tape in an X-axis direction, wherein the │ ─ S11
│ first width of the first insulating tape is less than │
│ the second width of second insulating tape │
└─────────────────────────────────────┘
                     ↓
┌─────────────────────────────────────┐
│ disposing a wire, in a direction parallel to the │
│ X-axis direction, on the portion of the second │ ─ S12
│ insulating tape that is not covered by the first │
│ insulating tape │
└─────────────────────────────────────┘
                     ↓
┌─────────────────────────────────────┐
│ wrapping around the wire with the first insulating │
│ tape and the second insulating tape in a Y-axis │ ─ S13
│ direction perpendicular to the X-axis direction │
└─────────────────────────────────────┘
```

# FIG. 7

31      32

Y

X

# FIG. 8

FIG. 9

FIG. 10

411

41

412

D1

FIG. 11

41

D2

# FIG. 12

42

41

D3

# FIG. 13

FIG. 14

FIG. 15A

FIG. 15B

Z

X

Y

A1

A2

A3

FIG. 15C

A1

A2

A3

Aa

Ab

FIG. 15D

200

210

230

A1

A2

Aa

220

## FIG. 16

A2

A1

Aa

## FIG. 17

FIG. 18

FIG. 19A

FIG. 19B

FIG. 20

5

60

621
622 } 62

80

70

50

52

51

612
611 } 61

FIG. 21

50

52

51    53

# FIG. 22

FIG. 23A

FIG. 23B

**FIG. 24A**

**FIG. 24B**

**FIG. 25**

EP 4 661 264 A1

300a

FIG. 26

providing an isolation circuit including a power factor correction circuit and a resonant conversion circuit sequentially connected in series, wherein the resonant conversion circuit includes a primary circuit, a resonant circuit and a secondary circuit sequentially connected in series; the primary circuit is electrically connected to the power factor correction circuit, the resonant circuit includes a resonant inductor, a resonant capacitor and a transformer, wherein the transformer includes a primary winding and a secondary winding, and the resonant inductor, the resonant capacitor and the primary winding are connected in series; and the secondary circuit is electrically connected to the secondary winding; wherein at least one of the primary winding, the secondary winding and the resonant inductor includes a winding wire having a wire and an insulating layer/insulation structure wrapping around the wire, and along a direction parallel to an X-axis, the insulating layer is disposed through an edge of the insulating layer on the wire, wherein the edge of the insulating layer is arranged in a direction parallel to the X-axis, and then wraps around the wire in the Y-axis direction perpendicular to the X-axis direction until a number of insulating layers wrapping the wire is at least three

— S100

short-circuiting an input terminal and an output terminal of the isolation circuit for performing a withstand voltage test and obtaining a withstand voltage value between the input terminal and the output terminal of the isolation circuit

— S200

# FIG. 27

## EUROPEAN SEARCH REPORT

**Application Number**

EP 24 21 2065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 9 608 513 B2 (GEN ELECTRIC [US]) 28 March 2017 (2017-03-28) * figure 1 * * corresponding description * ----- | 1-3,7,11 | INV. H02M1/00 H02M1/42 H02M3/335 H01F5/04 |
| Y | EP 4 030 605 A1 (DELTA ELECTRONICS SHANGHAI CO [CN]) 20 July 2022 (2022-07-20) * figures 2,12,13 * * corresponding description * ----- | 1-3,7,11 | H01F5/06 H01F27/28 H01F41/10 H01F41/076 H01B13/08 H01R4/02 |
| Y | US 2024/113636 A1 (PENG BO-RUEI [TW] ET AL) 4 April 2024 (2024-04-04) * figure 5 * * corresponding description * ----- | 1-3,7,11 | H01R11/16 |
| Y | EP 4 273 894 A1 (DELTA ELECTRONICS THAILAND PUBLIC CO LTD [TH]) 8 November 2023 (2023-11-08) * figures 6,8 * * corresponding description * ----- | 1-3,7,11 | |
| Y | US 2021/383947 A1 (YUAN XIAOXIA [CN] ET AL) 9 December 2021 (2021-12-09) * figures 1-14 * * corresponding description * ----- | 1-3,7,11 | **TECHNICAL FIELDS SEARCHED (IPC)** H01F H01R H01B H02M |

The present search report has been drawn up for all claims

| Place of search | Date of completion of the search | Examiner |
|---|---|---|
| The Hague | 3 May 2025 | Weisser, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 24 21 2065

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3, 7, 11

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

Application Number

EP 24 21 2065

The Search Division considers that the present European patent application does not comply with the requirements of unity of invention and relates to several inventions or groups of inventions, namely:

1. claims: 1-3, 7, 11

    Isolation circuit according to present claim 1, further specifying the power factor correction circuit to comprise a rectifier circuit and a boost circuit having an energy storage inductor, a first switch, a diode and a first output capacitor (claim 2), the primary circuit to comprise an inverter circuit having a second switch and a third switch, and the secondary circuit to comprise a fourth switch, a fifth switch and a second output capacitor (claim 3). The additional subject matter of claim 7 (the insulating layer being an insulation tape) and claim 11 (the resonant inductor comprising the winding wire) could be searched together therewith.
    ---

2. claims: 4-6

    Isolation circuit according to present claim 1, further specifying the winding wire to comprise a plurality of wires, specially twisted at least thirty-three times in a lenth of one meter (claim 4).
    ---

3. claims: 8-10

    Isolation circuit according to present claim 1, further specifying the provision of a spacing distance between the primary winding and the secondary winding (claim 8), with an insulating separation layer disposed therein (claim 9).
    ---

4. claim: 12

    Withstand voltage testing method for an isolation circuit (as specified in present claim 1).
    ---

EP 4 661 264 A1

## ANNEX TO THE EUROPEAN SEARCH REPORT
## ON EUROPEAN PATENT APPLICATION NO.

EP 24 21 2065

03-05-2025

| Patent document cited in search report | | Publication date | Patent family member(s) | | Publication date |
|---|---|---|---|---|---|
| US 9608513 | B2 | 28-03-2017 | CN | 104052297 A | 17-09-2014 |
| | | | US | 2014268905 A1 | 18-09-2014 |
| EP 4030605 | A1 | 20-07-2022 | CN | 114825902 A | 29-07-2022 |
| | | | EP | 4030605 A1 | 20-07-2022 |
| US 2024113636 | A1 | 04-04-2024 | CN | 117826664 A | 05-04-2024 |
| | | | US | 2024113636 A1 | 04-04-2024 |
| | | | WO | 2024066480 A1 | 04-04-2024 |
| EP 4273894 | A1 | 08-11-2023 | CN | 117012528 A | 07-11-2023 |
| | | | EP | 4273894 A1 | 08-11-2023 |
| | | | US | 2023360850 A1 | 09-11-2023 |
| US 2021383947 | A1 | 09-12-2021 | NONE | | |